# EUROPEAN PATENT SPECIFICATION

(11) **EP 1 152 624 B1**
(45) Date of publication and mention of the grant of the patent: **04.05.2005**
(21) Application number: 00979099.9
(22) Date of filing: 05.12.2000
(51) Int. Cl.: H04Q 7/32, H04J 13/00

(54) **COMMUNICATION TERMINAL AND WIRELESS COMMUNICATION METHOD**
KOMMUNIKATIONSENDGERÄT UND DRAHTLOSES KOMMUNIKATIONSVERFAHREN
TERMINAL DE COMMUNICATION ET PROCEDE DE COMMUNICATION SANS FIL

(30) Priority: 13.12.1999 JP 35367299
(43) Date of publication of application: 07.11.2001
(73) Proprietor: MATSUSHITA ELECTRIC INDUSTRIAL CO., LTD., Kadoma-shi, Osaka 571-8501 (JP)
(72) Inventor: AIHARA, Koichi, Kanagawa 239-0841 (JP); MORIMURA, Kazuo, Yokohama-shi, Kanagawa 220-0062 (JP); SUZUKI, Hidetoshi, Yokosuka-shi, Kanagawa 239-0847 (JP); WATANABE, Masatoshi, Yokohama-shi, Kanagawa 233-0008 (JP); IMAIZUMI, Satoshi, Yokosuka-shi, Kanagawa 239-0831 (JP)
(74) Representative: Grünecker, Kinkeldey, Stockmair & Schwanhäusser Anwaltssozietät
(86) International application number: PCT/JP2000/008604
(87) International publication number: WO 2001/043474

(56) References cited:
- EP-A- 0 812 119
- WO-A1-96/37083
- DE-C- 19 727 867
- JP-A- 10 126 830
- JP-A- 2000 092 543
- US-A- 5 574 996
- US-A- 5 889 768

## Description

### Technical Field

The present invention relates to a communication terminal apparatus and a radio communication method in a digital radio communication system.

### Background Art

A CDMA (Code Division Multiple Access) has been developed as a multi access scheme used for a next generation mobile communication method. In the above CDMA cellular system, a communication terminal performs cell detection and cell monitoring for cell switching (handover) during moving, and so on.

A method, by which detection of timing and the kind of a scrambling code is performed by masking of the scrambling code on a downlink control channel and by correlation detection of the masked section with a code for spreading common used to each cell, has been proposed as a cell detection method in the above CDMA cellular system, as disclosed in "High speed cell search method using a long code mask in an asynchronous cellular DS (Direct Spread)-CDMA between base stations" by HIGUCHI, SAWAHASHI, ADACHI, et al, IEICE (The Institute of Electronics, Information, and Communication Engineers) Technical Report RCS96-122, 1997-01.

In the above method, a transmission side (base station) transmits a symbol spread with the code for spreading common used to each cell; and a symbol spread with a short code for discrimination of a scrambling code group according to a scrambling code of each cell as a searching code after code multiplexing to a scrambling code masking section and a reception side (communication terminal) determines scrambling code candidates to be searched with a scrambling code identification section using the short code for discrimination of a scrambling code group after detection of a slot timing with the code for spreading common used to each cell; detects a frame timing; and further specifies a scrambling code peculiar to a cell from the above scrambling code candidates. Thereby, a new cell may be detected at high speed.

And. the above cell monitoring does not perform the above cell detection again, but carries out checking processing of the current levels (Ec/IO (signal electric power/transmitting and receiving electric power after despreading), and SIR (Signal to Interference Ratio), and so on) for base stations having a scrambling code and its rough frame timing both of which have been already clarified.

A conventional communication terminal has continuously performed cell detection and cell monitoring at a predetermined cycle. However, there are an increase in the electric power consumption for the communication terminal, and reduction in calling time and waiting time, 5 when the communication terminal continuously performs cell detection and cell monitoring. On the other hand, when the frequencies for cell detection and cell monitoring are extremely reduced, no realtime and accurate cell management may be performed to cause failure 10 in handover and a possibility that the calling is cut.

US A-5 889 768 discloses the detection of received levels of a signal from a base station in two steps. In the first step the received level is averaged over a short period of time. When the average level is above a predetermined threshold, then in the second step the received level is averaged over a longer period of time and the averaged level obtained is used to determined the definitive received level.

EP-A-0 812 119 discloses the control of the frequency of measurement based on such parameters as RSSI, BER and WER, thereby minimizing power consumption in a communication terminal apparatus.

### Disclosure of Invention

The object of the present invention is to provide a communication terminal apparatus and a radio communication method, which may save the electric power consumption as much as possible; and, moreover, may perform realtime and accurate cell management at cell detection and cell monitoring.

The object is solved by the invention as claimed in the independent claims. Preferred embodiments of the invention are defined by the dependent claims.

### Brief Description of Drawings

FIG. 1 is a block diagram showing a configuration of a piece of communication terminal apparatus according to an embodiment 1 of the present invention;
FIG. 2 is a view showing a cell management table according to a piece of communication terminal apparatus of the present invention;
FIG. 3 is a view showing a cell management table according to a piece of communication terminal apparatus of the present invention;
FIG. 4 is a view showing a cell management table according to a piece of communication terminal apparatus of the present invention;
FIG. 5 is a view showing a cell management table according to a piece of communication terminal apparatus of the present invention;
FIG. 6 is a block diagram showing a configuration of a piece of communication terminal apparatus according to an embodiment 2 of the present invention;
FIG. 7 is a block diagram showing a configuration of a piece of communication terminal apparatus according to an embodiment 3 of the present invention;
FIG. 8 is a block diagram showing a configuration of a piece of communication terminal apparatus according to an embodiment 4 of the present invention;
FIG. 9 is a block diagram showing a configuration of a piece of communication terminal apparatus according to an embodiment 5 of the present invention;
FIG. 10 is a block diagram showing a configuration of a piece of communication terminal apparatus according to an embodiment 6 of the present invention;
FIG. 11 is a block diagram showing a configuration of a piece of communication terminal apparatus according to an embodiment 7 of the present invention; and,
FIG. 12 is a block diagram showing a configuration of a piece of communication terminal apparatus according to an embodiment 8 of the present invention.

### Best Mode for Carrying Out the Invention

Hereinafter, embodiments according to the present invention will be described in detail, referring to the attached drawings.

### (Embodiment 1)

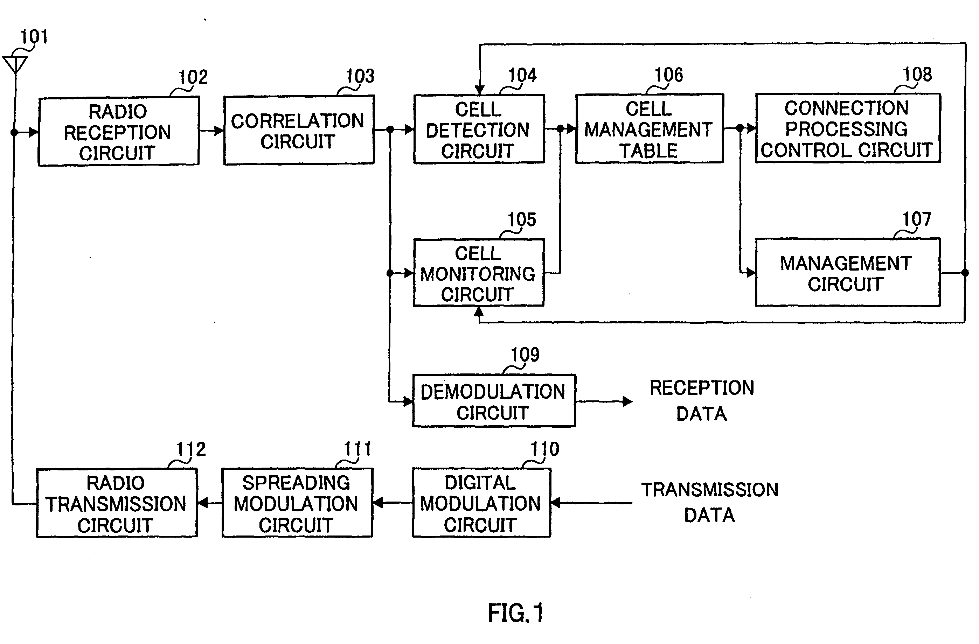

FIG. 1 is a block diagram showing a configuration of a piece of communication terminal apparatus according to an embodiment 1 of the present invention. There will be described below the cases, where a mode in a usual state, in which the cycle for cell detection/cell monitoring is set long, is switched to the following modes as required; a cell monitoring mode for reduction in the cell monitoring cycle; a cell detection mode for reduction in the cell detection cycle; and a cell monitoring/detection mode for reduction in the cycles for cell monitoring and cell detection. Here, the cycle which is set long means, for example, around 5 seconds, but the above cycle is not specially determined. As described above, cell monitoring and cell detection are performed at a long cycle in a usual state to cause efficient use of the electric power consumption.

In the above communication terminal apparatus, a signal transmitted from a piece of radio base station apparatus is received in a radio reception circuit 102 through an antenna 101. The above radio reception circuit 102 performs predetermined radio reception processing (for example, down convert, and analog/digital conversion) of the reception signal.

The reception signal after the radio reception processing as described above is output of a correlation circuit 103.

In the above correlation circuit 103, despreading processing of the reception signal is performed with a code for spreading (spreading code) used for spreading modulation at the transmission side to obtain a correlation value which is sent to a cell detection circuit 104.

In the above cell detection circuit 104, cell detection is performed using the correlation value obtained in the correlation circuit 103. And, the correlation value obtained in the correlation circuit 103 is also sent to a cell monitoring circuit 105. Further, the output from the correlation circuit 103 is sent to a demodulation circuit 109, where demodulation processing of the signal after the correlation processing is performed to obtain a reception data.

Cell detection results in the cell detection circuit 104 and cell monitoring results in the cell monitoring circuits 105 are sent to a cell management table 106 to update the cell management table 106 as required. In the above cell management table 106, base stations are classified for management into ones currently under communication (Active), candidate ones for a handover end (Candidate), or adjacent ones with a low level (Neighbor).

The information in the above cell management table 106 is sent to a connection processing control circuit 108 and at the same time to a management circuit 107. In the above connection processing control circuit 108, connection processing and so on at handover are controlled, based on the information in the cell management table (classification results).

And, the above management circuit 107 gives instructions for cell detection and cell monitoring, based on the information in the cell management table. That is, a control signal for cell detection is sent to the cell detection circuit 104, when the cell detection is required; and a control signal for cell monitoring is sent to the cell monitoring circuit 105, when the cell monitoring is required.

On the other hand, the transmission data is sent to a digital modulation circuit 110 for digital modulation, and then to a spreading modulation circuit 111, where spreading modulation processing of the signal after the digital modulation is performed, using a predetermined code for spreading, and the transmission data after the spreading modulation is sent to a radio transmission circuit 112, which performs predetermined radio transmission processing (digital/analog conversion, up convert and so on) of the transmission data after the spreading modulation. The transmission signal after radio transmission processing is transmitted to a base station through the antenna 101.

Then, control of the cycle for cell detection/cell monitoring of a piece of communication terminal apparatus with the above configuration will be described.

In the correlation circuit 103, despreading processing of the reception signal is performed to obtain a correlation value. The above correlation value is sent to the cell detection circuit 104 and the cell monitoring circuit 105. In the cell detection circuit 104, scrambling code candidates to be searched with a scrambling code identification section are determined, using a short code for discrimination of a scrambling code group after detection of a slot timing by a code for spreading common used to each cell; a frame timing is detected; and, further, cell detection processing for specification of a scrambling code peculiar to a cell from the above scrambling code candidates.

The above cell monitoring circuit 105 performs checking processing of the current levels (Ec/IO, and SIR, and so on) for base stations having a scrambling code and its rough frame timing both of which have been already clarified.

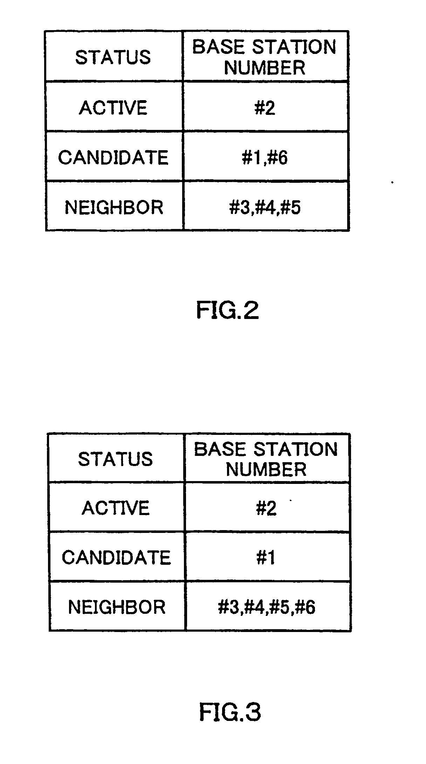

The above cell detection results and the cell monitoring ones are sent to the cell management table 106, and the cells are classified for management. For example, in the cell management table 106, base stations are classified for management, as shown in FIG. 2, into base stations currently under communication as a group of "ones currently under communication (Active)", candidate base stations for a handover end as a group of "candidate ones for a handover end (Candidate)", or base stations with a low level not as a candidate one for a handover end as a group of "adjacent ones with a low level (Neighbor)".

That is, a base station #2 is currently under communication; base stations #1 and #6 are candidates for a handover end; base stations #3, #4, and #5 are the ones with a low level, that is, not candidates for a handover end, as understood from FIG. 2.

The management circuit 107 changes the cycles (frequencies) for cell detection and cell monitoring, based on the information in the cell management table 106, and the results in the cell detection circuit 104 and the cell monitoring circuit 105. Threshold judgment is performed according to levels and numbers of base stations divided, for example, into the following classifications. Specifically, the following methods are listed.

In the first place, as a first method, the cycle for cell monitoring is made shorter (the frequency is made higher.) for "candidate ones for a handover end (Candidate)", or "adjacent ones with a low level (Neighbor), when the level of "ones currently under communication (Active)" is lower than a threshold, or when the sum of each level of "ones currently under communication" is lower than the threshold, for example, in the case of communication with a plurality of base stations such as at handover. In the description referring to FIG. 2, the cycles for cell monitoring of the base stations #1 and #6 in a group of "candidate ones as a handover end (Candidate)" are made shorter, when the level of the base station #2 in a group of "ones currently under communication (Active)" is lower than the threshold.

As described above, when the levels of base stations in a group of "ones currently under communication (Active)" are lower than the threshold, the levels of dominant waves of signals from base stations are assumed to be low, as the dominant waves of signals from base stations are hidden in the shadows of buildings and so on, or exist in the edge of each cell. In such a case, a handover end is configured to be selected early among "candidate ones as a handover end (Candidate)" by making the cycle shorter for cell monitoring of "Candidate ones as a handover end (Candidate)". Thereby, quick response to handover may be realized and the communication quality may be secured.

As a second method, the cycles for cell monitoring of base stations in a group of "candidate ones as a handover end (Candidate)" or "adjacent ones with a low level (Neighbor)" are made shorter (the frequencies are made higher), when the number of base stations in a group of "ones currently under communication (Active)" is lower than a threshold. And, the cycles for cell monitoring of base stations in a group of "candidate ones as a handover end (Candidate)" or "adjacent ones with a low level (Neighbor)" are made longer (the frequencies are made lower), when the number of "ones currently under communication (Active)" is equal to or larger than the threshold.

Moreover, the cycles for cell monitoring and cell detection are made shorter as there is a possibility of failure in soft handover (diversity handover) due to small number of handover ends in the case of small number of "ones currently under communication (Active)", when the number of "candidate ones as a hndover end (Candidate)" is less than a predetermined number, and/or when the number of "adjacent ones with a low level (Neighbor)" is less than a predetermined number.

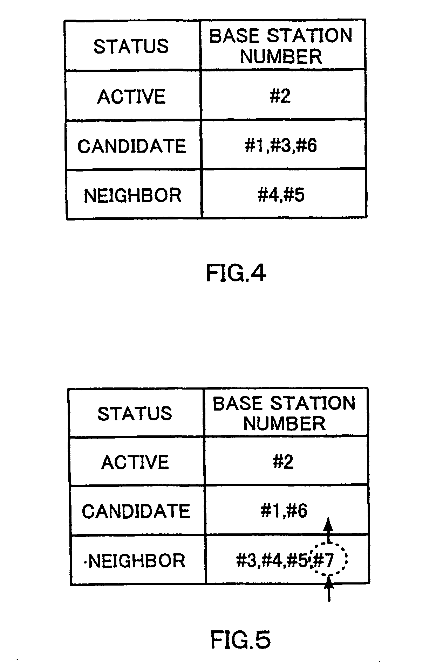

In the description referring to FIG. 3, "candidate ones as a handover end (Candidate)" are selected early, as shown in FIG. 4, by making the cycle for cell monitoring of "adjacent ones with a low level (Neighbor)" shorter, when only the base station #1 is in the group of "Candidate ones as a handover end (Candidate)". Thereby, soft handover may be preferably realized.

As a third method, the cycle for cell detection is made shorter, when both the levels of "ones currently under communication (Active)" and "candidate ones as a handover end (Candidate)" are within a range of a threshold.

As described above, when both the levels of base stations in a group of "ones currently under communication (Active)" and in a group of "candidate ones as a handover end (Candidate)" are with in a range of a threshold, all of the levels of the dominant waves of signals from base stations in a group of "ones currently under communication (Active)" and in a group of "candidate ones as a handover end (Candidate)" are assumed to be low, as dominant waves of signals from base stations in a group of "ones currently under communication (Active) " and in a group of "candidate ones as a handover end (Candidate)" are hidden in the shadows of buildings and so on, or exist in the edge of each cell. In such a case, "ones currently under communication (Active) " and "candidate ones as a handover end (Candidate)" are configured to be selected early by making the cycle for cell detection shorter. Thereby, quick response to handover may be realized and the communication quality may be secured.

As a fourth method, the cycle for cell monitoring of a base station with a level which has become higher is made shorter, as it is assumed in such a case that the communication terminal is approaching to the above base station with a level which has become higher.

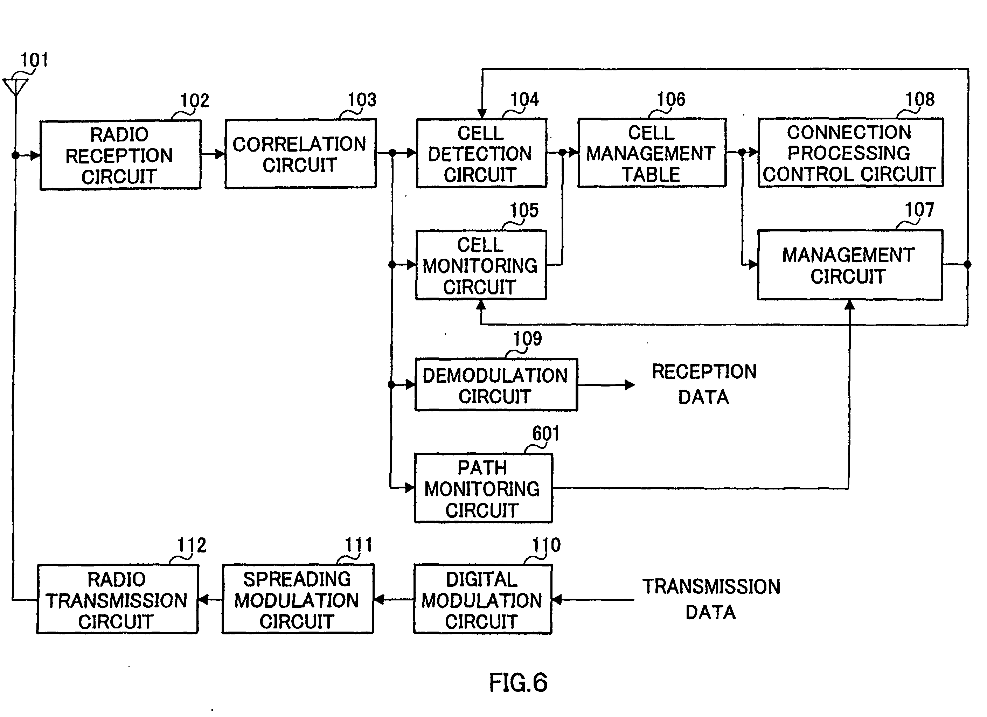

For example, the cycle for cell monitoring of a base station #7 is made shorter, as it is assumed that the communication terminal is approaching to the base station #7 when the base station #7 becomes included in a group of "adjacent ones with a low level (Neighbor)", and, further, in a group of "candidate ones as a handover end (Candidate)" as shown in FIG. 5. Thereby, it is possible quickly to judge which base station has the highest possibility as a handover end.

As a fifth method, the cycle for cell monitoring of a base station is made shorter, as it is assumed that there is a high possibility that the communication terminal is in the cell edge of the above base station when the group in which the above base station is included is switched between "the level of ones currently under communication (Active) " and "the level of candidate ones as a handover end" many times in a predetermined time. Thereby, quick response to handover may be realized.

The management circuit 107 gives an instruction for cell monitoring/cell detection at a changed cycle to the cell detection circuit 104 and the cell monitoring circuit 105 after changing the cycle of the cell monitoring/cell detection by the above event.

Specifically, when the cycle for cell detection is made shorter, the mode of the management circuit 107 is switched from a normal mode (long cycles for cell detection and cell monitoring) to a cell detection mode, and a control signal for cell detection is sent to the cell detection circuit 104 at a short cycle for the cell detection mode. And, when the cycle of the cell monitoring is made shorter, the mode of the management circuit 107 is switched from a normal mode to a cell monitoring mode, and a control signal for cell monitoring at a short cycle for the cell monitoring mode is sent to the cell monitoring circuit 105. Further, when the cycles for cell detection and cell monitoring are made shorter, the mode of the management circuit 107 is switched from a normal mode to a cell detection/cell monitoring mode, and a control signal for cell detection at a short cycle for the cell detection/cell monitoring mode is sent to the cell detection circuit 104 and a control signal for cell monitoring at the above short cycle is done to the cell monitoring circuit 105.

As described above, it is possible to save the electric power consumption as much as possible; and, to make the calling time and waiting time longer, as a piece of communication terminal apparatus according to the present embodiment dynamically controls and reduces the frequencies for cell detection and cell monitoring, depending on the levels and the numbers of "ones currently under communication (Active)" and "candidate ones as a handover end . (Candidate)". And, the communication quality may be secured at handover by reliable handover, as it is possible to perform realtime and accurate cell management at cell detection and cell monitoring.

In the description of the present embodiment, base stations are classified to three groups of "ones currently under communication (Active)", "candidate ones as a handover end (Candidate)" and "adjacent ones with a low level (Neighbor)", but the base stations may be classified to two groups, or to equal to or more than four groups by changing a set threshold in the present invention.

### (Embodiment 2)

In the description of the present embodiment, an average and/or a variance of each Ec/IO of fingers are monitored, and cycles for cell monitoring and cell detection are made shorter, regarding the time, when the above value or values becomes or become lower than the threshold, as an event.

FIG. 6 is a block diagram showing a configuration of a piece of communication terminal apparatus according to an embodiment 2 of the present invention. In FIG. 6, parts similar to those in FIG. 1 are denoted by the same reference numerals as those in FIG. 1, and detailed description will be eliminated.

The communication terminal apparatus shown in FIG. 6 is provided with a path monitoring circuit 601 monitoring of paths for each finger, using the output of the correlation circuit 103. The above path monitoring circuit 601 sends an instruction for changing of the cycle for cell detection/cell monitoring, based on the path monitoring results. The management circuit 107 sends a control signal for cell detection/cell monitoring to the cell detection circuit 104 and/or the cell monitoring circuit 105 at the changed cycle.

Thereby, cell detection/cell monitoring is performed at the changed cycle.

Subsequently, control of the cycle for cell detection/cell monitoring of a piece of communication terminal apparatus with the above configuration will be described.

In the correlation circuit 103, a correlation value is obtained after despreading processing of a reception signal. The above correlation value is sent to the cell detection circuit 104 and the cell monitoring circuit 105, and, at the same time, to the path monitoring circuit 601.

In the cell detection circuit 104 and the cell monitoring circuit 105, cell detection and cell monitoring are performed, based on the correlation value for sending the results to the cell management table 106. In the cell management table 106, a classification, for example, to base stations currently under communication in a group of "ones currently under communication (Active)"; base stations as candidate ones as a handover end in a group of "candidate ones as a handover end (Candidate)"; or base stations with a low level which is not a candidate as a handover end in a group of "adjacent ones with a low level (Neighbor)" is performed for management. Here, cell detection and cell monitoring are performed in a similar manner to those of the embodiment 1.

The path monitoring circuit 601 performs path monitoring for each finger based on the correlated values . Specifically, the path monitoring circuit 601 obtains each Ec/IO of fingers for monitoring its averages and variances. And, when the averages and the variances are lower than a predetermined threshold, a control signal for making the cycles for cell monitoring and cell detection shorter is sent to the management circuit 107, assuming that there are no dominant waves of signals from base stations. The management circuit 107 changes the cycles for cell detection and cell monitoring according to the control signal, and gives an instruction for cell detection and cell monitoring at the changed cycles to the cell detection circuit 104 and the cell monitoring circuit 105.

As described above, it is possible in the communication terminal apparatus according to the present embodiment to save the electric power consumption as much as possible; and, to make the calling time and waiting time longer by dynamic control of the frequencies for cell detection and cell monitoring according to each Ec/IO of fingers. And, handover operation may be performed in a reliable manner, and the communication quality may be secured at handover, as it is possible to perform realtime and accurate cell management at cell detection and cell monitoring.

Here, though control of the cycles for cell detection and cell monitoring is performed according to the averages and the variances for each Ec/IO in the description of the present embodiment, the reception quality other than the Ec/IO of each finger may be monitored and the cycles for cell detection and cell monitoring may be controlled based on the monitoring results in the present invention.

### (Embodiment 3)

In the description of the present embodiment, a rapid change in the reception level is monitored, and cycles for cell monitoring and cell detection are made shorter, regarding the rapid change in the reception level as an event.

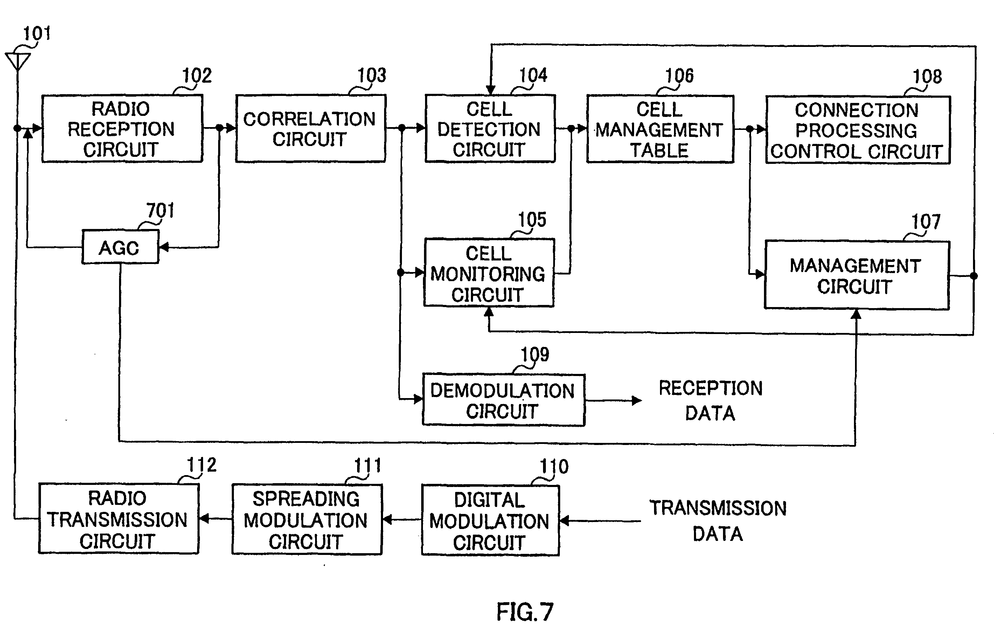

FIG. 7 is a block diagram showing a configuration of a piece of communication terminal apparatus according to an embodiment 3 of the present invention. In FIG. 7, parts similar to those in FIG. 1 are denoted by the same reference numerals as those in FIG. 1, and detailed description will be eliminated.

The communication terminal apparatus shown in FIG. 7 is provided with an AGC circuit 701 for output of a gain-controlled signal to the radio reception circuit 102 after gain control of the output of the radio reception circuit 102. The above AGC circuit 701 monitors the output of the radio reception circuit 102, and sends an instruction for changing, based on the monitoring results, the cycle for cell detection/cell monitoring to the management circuit 107. The management circuit 107 sends a control signal for cell detection/cell monitoring at the changed cycle to the cell detection circuit 104 and/or the cell monitoring circuit 105. Thereby, cell detection/cell monitoring is performed at the changed cycle.

Then, control of the cycle for cell detection/cell monitoring of a piece of communication terminal apparatus with the above configuration will be described.

Predetermined radio reception processing of a reception signal received with the radio reception circuit 102 through the antenna 101 is performed with the radio reception circuit 102. The signal after the above radio reception processing is output from the radio reception circuit 102 to the AGC circuit 701 for gain control with the AGC circuit 701. In such a case, the AGC circuit 701 monitors a rapid change in the reception level, too. And the AGC circuit 701 sends a control signal for making the cycles for cell monitoring and cell detection shorter to the management circuit 107 in the case of a rapid change in the reception level change, for example, when a base station suddenly appears from the shadow of a building, and when a call on a high speed user data channel is disconnected. The management circuit 107 changes the cycles for cell detection and cell monitoring according to the above control signal, and gives instructions for cell detection and cell monitoring at the changed cycles to the cell detection circuit 104 and the cell monitoring circuit 105. Here, the above rapid change in the reception level may be detected by the threshold judgement, for example, of a variation from the previous measurement.

The signal after gain control with the AGC circuit 701 is sent to the radio reception circuit 102 for predetermined radio reception processing, and then to the correlation circuit 103. In the correlation circuit 103, despreading processing of the reception signal is performed to obtain a correlation value, which is sent to the cell detection circuit 104 and the cell monitoring circuit 105. The processing in the cell detection circuit 104 and the cell monitoring circuit 105 is performed in a similar manner to those of the above embodiment, and the description will be eliminated. Here, cell detection and cell monitoring are performed in a similar manner to those of the embodiment 1.

As described above, the communication terminal apparatus according to the present embodiment saves electric power consumption as much as possible; and, makes calling time and waiting time longer by dynamic control of the frequencies for cell detection and cell monitoring according to a rapid change in the reception level. And, handover operation may be performed in a reliable manner, and the communication quality may be secured at handover, as it is possible to perform realtime and accurate cell management at cell detection and cell monitoring.

### (Embodiment 4)

In the description of the present embodiment, a moving speed and an altitude are monitored and cycles for cell monitoring and cell detection are controlled, regarding moving speed and altitude as an event.

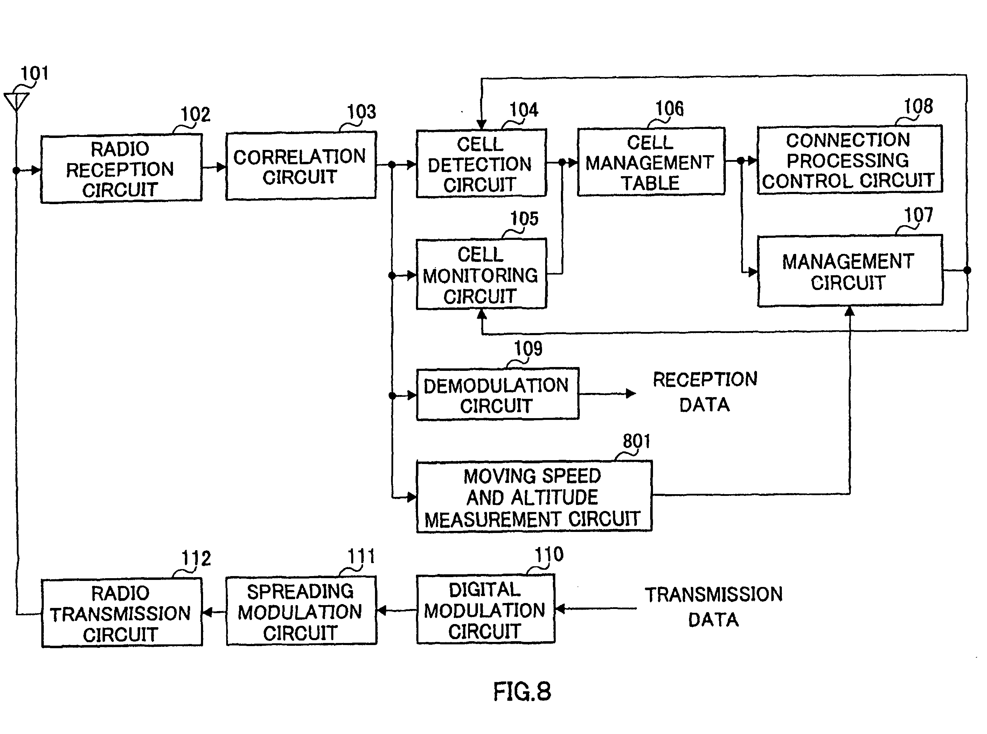

FIG. 8 is a block diagram showing a configuration of a piece of communication terminal apparatus according to an embodiment 4 of the present invention. In FIG. 8, parts similar to those in FIG. 1 are denoted by the same reference numerals as those in FIG. 1, and detailed description will be eliminated.

The communication terminal apparatus shown in FIG. 8 is provided with a moving speed/altitude measurement circuit 801 for measurement of moving speed and altitude using the output of the correlation circuit 103. The above moving speed and altitude measurement circuit 801 obtains moving speed, using the Doppler frequency, or moving speed and altitude using a positioning system. And an instruction for changing the cycle for cell detection/cell monitoring based on the above moving speed and the altitude is sent to the management circuit 107. The management circuit 107 sends a control signal for cell detection/cell monitoring at the changed cycle to the cell detection 104 and/or the cell monitoring 105. Thereby, cell detection/cell monitoring is performed at the changed cycle.

Subsequently, control of the cycle for cell detection/cell monitoring of a piece of communication terminal apparatus with the above configuration will be described.

In the correlation circuit 103, a correlation value is obtained after despreading processing of the reception signal. The above correlation value is sent to the cell detection circuit 104 and the cell monitoring circuit 105, and at the same time to the moving speed/altitude measurement circuit 801.

In the moving speed and altitude measurement circuit 801, the moving speed and the altitude are measured, and a control signal for changing the cycles for cell detection and cell monitoring, for example, when the above measured value exceeds a predetermined threshold. The management circuit 107 changes the cycles for cell detection and cell monitoring according to the above control signal, and gives instructions for cell detection and cell monitoring according to the changed cycles to the cell detection circuit 104 and the cell monitoring circuit 105. For example, the cycles for cell detection and cell monitoring are made shorter, as it is assumed that there is a high possibility of handover when moving speed is high (when the Doppler frequency is high). And, the cycles for cell detection and cell monitoring are made longer in the case of the high altitude, as it is assumed that there is less signal reflection.

The processing in the cell detection circuit 104 and the cell monitoring circuit 105 is performed in a similar manner to those of the above embodiment, and the description will be eliminated. Here, cell detection and cell monitoring are performed in a similar manner to those of the embodiment 1.

As described above, the communication terminal apparatus according to the present embodiment saves electric power consumption as much as possible; and, makes calling time and waiting time longer by dynamic control of the frequencies for cell detection and cell monitoring according to the moving speed and the altitude. And, handover operation may be performed in a reliable manner, and the communication quality may be secured at handover, as it is possible to perform realtime and accurate cell management at cell detection and cell monitoring.

### (Embodiment 5)

In the description of the present embodiment, cycles for cell monitoring and cell detection are controlled, regarding information on the external electric power as an event.

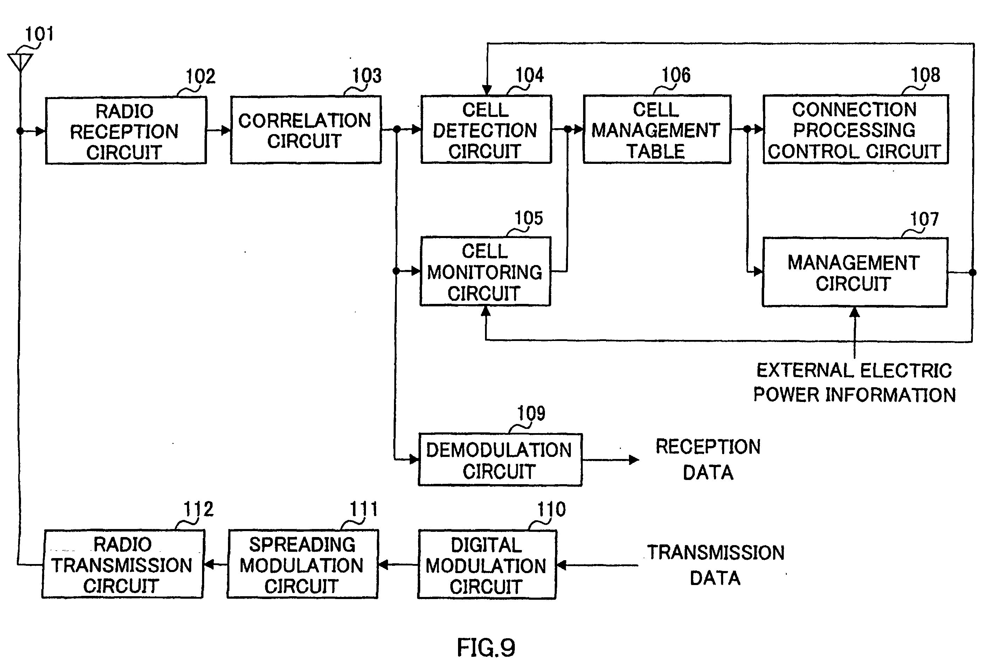

FIG. 9 is a block diagram showing a configuration of a piece of communication terminal apparatus according to an embodiment 5 of the present invention. In FIG. 9, parts similar to those in FIG. 1 are denoted by the same reference numerals as those in FIG. 1, and detailed description will be eliminated.

The communication terminal apparatus shown in FIG. 9 has a configuration where the external electric power information is input to the management circuit 107, in which a control signal for cell detection/cell monitoring is sent to the cell detection circuit 104 and/or the cell monitoring circuit 105 according to the above external electric power information. Thereby, the cell detection and the cell monitoring are performed at the changed cycle.

As the external electric power information, the following ones may be listed, for example: information connected to an on-board kit; information connected to an AC charger; and information connected to a personal computer. That is, when the management circuit 107 receives information for identification of pieces of built-in apparatus such as an on-board kit, cycles for cell detection and cell monitoring are made shorter, as it is assumed that there is a high possibility of high speed movement and handover. And, the cycles for cell detection and cell monitoring are made longer for energy conversation and increase in the charging rate, when the management circuit 107 receives information for identification of the charger. Further, the cycles for cell detection and cell monitoring are made shorter as there is no need to consider the electric power consumption when information for identification of a piece of external electric power apparatus of a piece of fixed type apparatus such as a personal computer is received. However, the cycles for cell detection and cell monitoring are made longer, when a battery in the own apparatus is used even in the case of connection to a personal computer.

The processing in the cell detection circuit 104 and the cell monitoring circuit 105 is performed in a similar manner to those of the above embodiment, and the description will be eliminated. Here, cell detection and cell monitoring are performed in a similar manner to those of the embodiment 1.

As described above, the communication terminal apparatus according to the present embodiment saves electric power consumption as much as possible; and, makes calling time and waiting time longer by dynamic control of the frequencies for cell detection and cell monitoring according to the information on the external electric power. And, handover operation may be performed in a reliable manner, and the communication quality may be secured at handover, as it is possible to perform realtime and accurate cell management at the cell detection and the cell monitoring.

### (Embodiment 6)

In the description of the present embodiment, cycles for cell monitoring and cell detection are made shorter, regarding service information or spreading factor (SF, spreading ratio) information as an event.

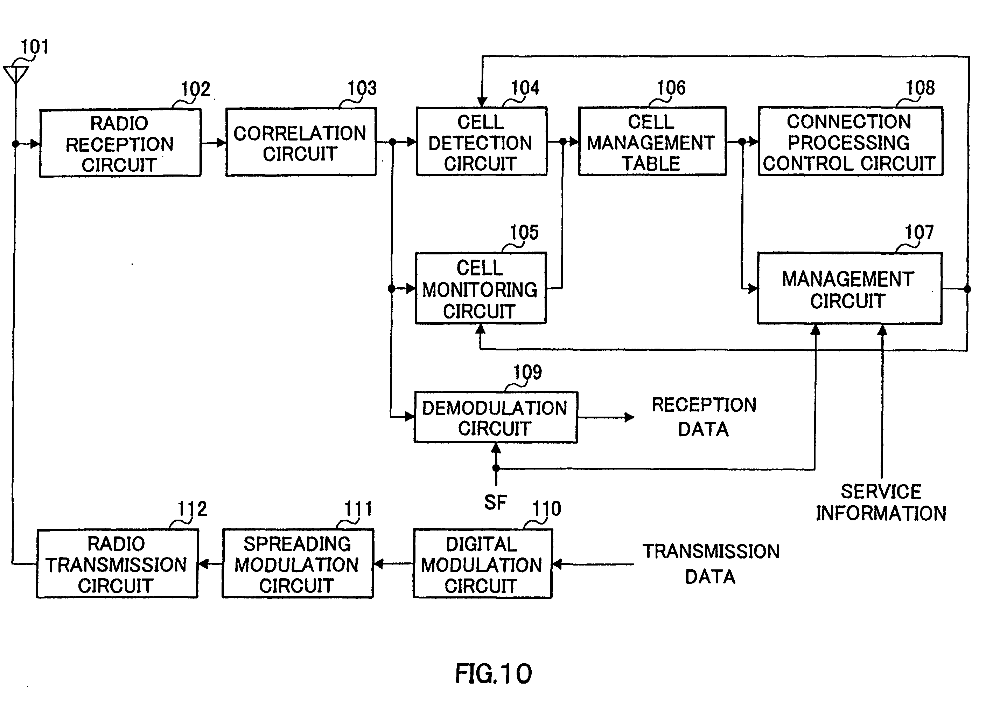

FIG. 10 is a block diagram showing a configuration of a piece of communication terminal apparatus according to an embodiment 6 of the present invention. In FIG. 10, parts similar to those in FIG. 1 are denoted by the same reference numerals as those in FIG. 1, and detailed description will be eliminated.

The communication terminal apparatus shown in FIG. 10 has a configuration where service information and spreading factor information are input to the management circuit 107, which sends a control signal for cell detection/cell monitoring to the cell detection circuit 104 and/or the cell monitoring circuit 105 according to the spreading factor information. Thereby, cell detection and cell monitoring are performed according to the changed cycle.

For example, information denoting that the signal is of a circuit switching type like a voice may be listed as service information. That is, the cycles for cell detection and cell monitoring are made shorter, as no intermittent interruption is requiredwhen the management circuit 107 receives information of a signal of a circuit switching type from the upper layer.

Then, it is judged by the threshold judgement whether the spreading factor is high or low when the management circuit 107 receives the spreading factor information. And, in the case of a low spreading factor, the cycles for cell detection and cell monitoring are made shorter, as the communication is easily disconnected.

The processing in the cell detection circuit 104 and the cell monitoring circuit 105 is performed in a similar manner to those of the above embodiment, and the description will be eliminated. Here, cell detection and cell monitoring are performed in a similar manner to those of the above embodiment 1.

As described above, the communication terminal apparatus according to the present embodiment saves electric power consumption as much as possible; and, makes calling time and waiting time longer by dynamic control of the frequencies for cell detection and cell monitoring according to the service information and the spreading factor information. And, handover operation may be performed in a reliable manner, and the communication quality may be secured at handover, as it is possible to perform realtime and accurate cell management at cell detection and cell monitoring.

### (Embodiment 7)

In the description of the present embodiment, a BER (Bit Error Rate), a CRC (Cyclic Redundancy Check), and a BLER (Block Error Rate) are monitored, and cycles for cell monitoring and cell detection are made shorter, regarding the time, when the above value or values becomes or become lower than a thresholds, as an event.

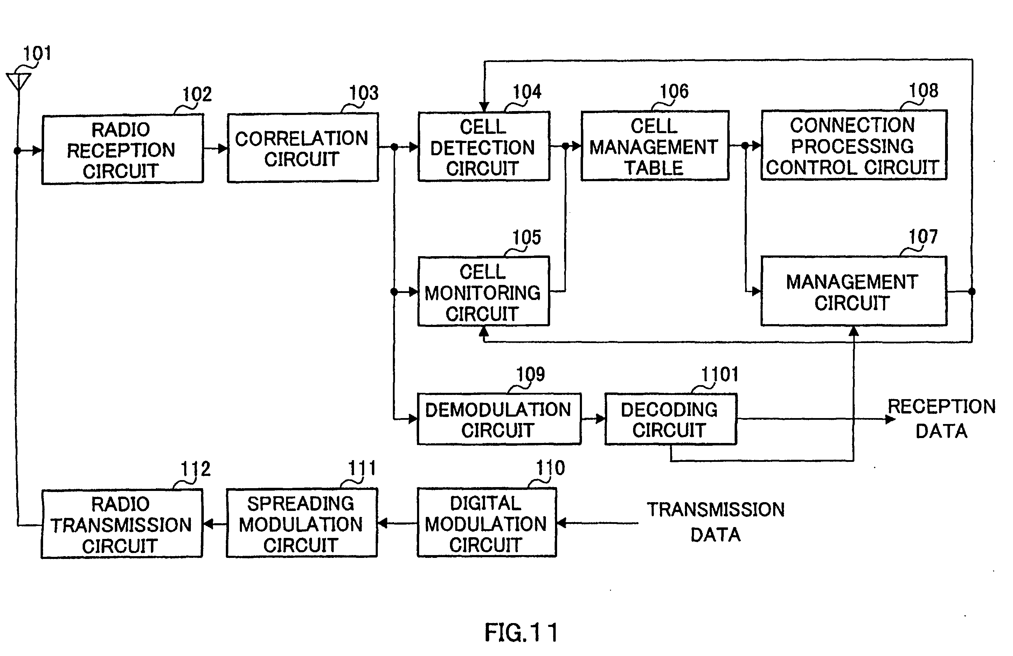

FIG. 11 is a block diagram showing a configuration of a piece of communication terminal apparatus according to an embodiment 7 of the present invention. In FIG. 11, parts similar to those in FIG. 1 are denoted by the same reference numerals as those in FIG. 1, and detailed description will be eliminated.

The communication terminal apparatus shown in FIG. 11 comprises a decoding circuit 1101 for decoding of a signal from a demodulation circuit 109. Here, the above decoding circuit 1101 is eliminated in the description of the above embodiments for simplification, though the above circuit is included in the communication terminal apparatus according to the above embodiments.

The above decoding circuit 1101 measures a BER, a CRC, and a BLER of a reception signal, and sends to the management circuit 107 an instruction for changing the cycle for cell detection/cell monitoring based on the above measuring results. The management circuit 107 sends at the changed cycle a control signal for cell detection/cell monitoring to the cell detection circuit 104 and/or the cell monitoring circuit 105. Thereby, cell detection and cell monitoring are performed at the changed cycle.

Subsequently, control of the cycle for cell detection/cell monitoring of a piece of communication terminal apparatus with the above configuration will be described.

In the correlation circuit 103, a correlation value is obtained by despreading processing of the reception signal. The above correlation value is sent to the cell detection circuit 104 and the cell monitoring circuit 105, and, at the same time, to the demodulation circuit 109.

The demodulation circuit 109 performs demodulation processing of the signal after despreading and sends the processed signal to the decoding circuit 1101, which decodes the signal after the above demodulation processing, and, at the same time, measures the BER, the CRC, and the BLER, for example, for the threshold judgement of the measured BER, CRC, and BLER. For example, when the above measurement results are equal to or larger than a predetermined threshold, a control signal for making the cycles for cell monitoring and cell detection shorter is sent to the management circuit 107, assuming that the quality of the reception signal is deteriorated. The management circuit 107 changes the cycles for cell detection and cell monitoring according to the above control signal and gives instructions for cell detection and cell monitoring at the changed cycle to the cell detection circuit 104 and the cell monitoring circuit 105.

The processing in the cell detection circuit 104 and the cell monitoring circuit 105 is performed in a similar manner to those of the above embodiment, and the description will be eliminated. Here, cell detection and cell monitoring are performed in a similar manner to those of the above embodiment 1.

As described above, the communication terminal apparatus according to the present embodiment saves electric power consumption as much as possible; and, makes calling time and waiting time longer by dynamic control of the frequencies for cell detection and cell monitoring according to the BER, the CRC, and the BLER after the decoding. And, handover operation may be performed in a reliable manner, and the communication quality may be secured at handover, as it is possible to perform realtime and accurate cell management at cell detection and cell monitoring.

### (Embodiment 8)

In the description of the present embodiment, cycles for cell monitoring and cell detection are made shorter, regarding selection mode information as an event.

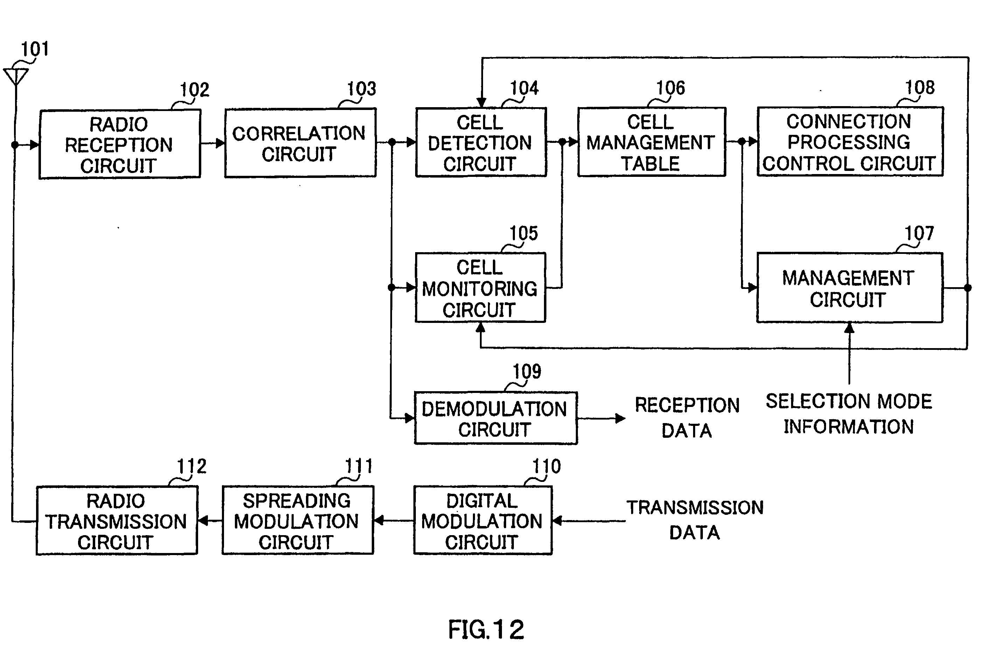

FIG. 12 is a block diagram showing a configuration of a piece of communication terminal apparatus according to an embodiment 8 of the present invention. In FIG. 12, parts similar to those in FIG. 1 are denoted by the same reference numerals as those in FIG. 1, and detailed description will be eliminated.

The communication terminal apparatus shown in FIG. 12 has a configuration where the selection mode information is input to the management circuit 107. The management circuit 107 sends a control signal for cell detection/cell monitoring to the cell monitoring circuit 105 and/or the cell detection circuit 104, according to the selection mode information. Thereby, cell detection/cell monitoring is performed at the changed cycle. The selection mode information is mode information by selection switching for low electric power consumption and high quality. Thereby, a user may select, as required, control of the cycles for cell detection and cell monitoring according to the event.

That is, cell detection and cell monitoring are controlled according to the event described in the above embodiment when the management circuit 107 receives a control signal for making the control according to the present invention ON with a selection switch for low electric power consumption. And, cell detection and cell monitoring are performed at usual cycles when there is received a control signal for making the control according to the present invention OFF with the selection switch in order for a user to obtain the high quality.

The processing in the cell detection circuit 104 and the cell monitoring circuit 105 is performed in a similar manner to those of the above embodiment, and the description will be eliminated. Here, cell detection and cell monitoring are performed in a similar manner to those of the above embodiment 1.

As described above, the communication terminal apparatus according to the present embodiment saves electric power consumption as much as possible; and, makes calling time and waiting time longer by dynamic control of the frequencies for cell detection and cell monitoring according to the selection mode information. And, handover operation may be performed in a reliable manner, and the communication quality may be secured at handover, as it is possible to perform realtime and accurate cell management at cell detection and cell monitoring.

Furthermore, when information on a cell candidate of another system (GSM (Global System for Mobile Communications), PDC (Personal Digital Cellular), PHS (Personal Handyphone System), and so on) is known, for example, in a dual mode terminal, the control according to the present invention may be performed by using the above information. That is, the frequencies for cell detection and cell monitoring of the present system may be made shorter using the cell candidate for the other system. This is effective for monitoring of other systems during transmission suspension in a compressed mode.

And, frequencies for cell detection and cell monitoring are made higher so that returning to the own service operator is performed as soon as possible, when the communication terminal is connected to other service operators and is in the boundary between areas of other service operators and the area of the own service operator, for example, when the communication terminal is in the boundary between an area of a service operator necessary for roaming and the area of the own service operator. Thereby, cheap call charges may be realized.

Suitable combinations among the above embodiments 1 - 8 may be executed.

The present invention is not limited to the above embodiments 1 - 8, and variations may be executed with modifications.

The communication terminal apparatus according to the present invention has a configuration comprising: a cell detection section for cell detection based on the results of correlation operation processing of a reception signal using a code to spread used for a transmission side; a cell monitoring section for cell monitoring using the results of the above correlation operation processing; a cell management table for management by classification into base station groups, based on the above results of cell detection and the above ones of cell monitoring; and a management section for control of the cycle for cell detection and/or cell monitoring according to an event.

The above configuration saves electric power consumption as much as possible; and, makes calling time and waiting time longer by dynamic control of the frequencies for cell detection and cell monitoring according to various kinds of events. And, handover operation may be performed in a reliable manner, and the communication quality may be secured at handover, as it is possible to perform realtime and accurate cell management at cell detection and cell monitoring.

The communication terminal apparatus according to the present invention has a configuration, wherein, in the above configuration, a management section controls the cycle for cell detection and/or cell monitoring, based on the levels of signals from base stations and on the number of base stations managed in the above cell management table.

The communication terminal apparatus according to the present invention has a configuration, wherein, in the above configuration, the above communication terminal apparatus comprises a monitoring section for monitoring the reception quality of each finger using the correlation operation processing results, and the above management section controls the cycle for cell detection/cell monitoring based on the above reception quality.

The communication terminal apparatus according to the present invention has a configuration, wherein, in the above configuration, the above communication terminal apparatus comprises a gain control section for control of the gain of the reception signal, and the above management section controls the cycle for cell detection/cell monitoring based on the above gain information of the reception signal.

The communication terminal apparatus according to the present invention has a configuration, wherein, in the above configuration, the above communication terminal apparatus comprises a measurement section for measurement of moving speed or altitude using the reception signal, and the above management section controls the cycle for cell detection/cell monitoring based on the above measurement results of moving speed or altitude.

The communication terminal apparatus according to the present invention has a configuration, wherein, in the above configuration, the management section controls the cycle for cell detection/cell monitoring based on at least one of pieces of information selected from a group comprising external electric power information, service information, spreading factor information, and error rate information.

The above configurations saves electric power consumption as much as possible; and, makes calling time and waiting time longer by control of the frequencies for cell detection and cell monitoring according to various kinds of events.

The base station apparatus according to the present invention is characterized in that the above base station apparatus performs radio communication with the above communication terminal apparatus. Thereby, handover operation may be performed without interruption and under securing predetermined communication quality.

The radio communication method according to the present invention comprises: a cell detection step for cell detection based on the results of correlation operation processing of a reception signal using a code to spread used for a transmission side; a cell monitoring step for cell monitoring using the above results of correlation operation processing; a management step for management by classification into base station groups, based on the above results of cell detection and the above ones of cell monitoring; and a control step for control of the cycle for cell detection and/or cell monitoring according to events.

The above method saves electric power consumption as much as possible; and, makes calling time and waiting time longer by dynamic control of the frequencies for cell detection and cell monitoring according to various kinds of events. And, handover operation may be performed in a reliable manner, and the communication quality may be secured at handover, as it is possible to perform realtime and accurate cell management at cell detection and cell monitoring.

As described above, the communication terminal apparatus according to the present invention may save electric power consumption as much as possible; and, make calling time and waiting time longer, as the frequencies for cell detection and cell monitoring is dynamically controlled and reduced according to various kinds of factors (events). And, handover operation may be performed in a reliable manner, and the communication quality may be secured at handover, as it is possible to perform realtime and accurate cell management at cell detection and cell monitoring.

### Industrial Applicability

The present invention may be applicable to a piece of communication terminal apparatus and a method for radio communication.

## Claims

1. A communication terminal apparatus for performing communications within a mobile communication network including a base station, comprising:
cell detection means (104) for cell detection based on the results of correlation operation processing of a reception signal using a code for spreading used for a transmission side;
cell monitoring means (105) for cell monitoring using the results of said correlation operation processing;
a cell management table (106) for management of cell information by classificationof the base stations into base station groups, based on said results of cell detection and cell monitoring; and
management means (107) for control of the cycle of performing cell detection and/or cell monitoring based on contents of the cell management table;
**characterised in that**
said management table is adapted to shorten the cycle of the cell monitoring when the number of said base stations currently in communication is below a first predetermined threshold.

2. A communication terminal apparatus according to claim 1, wherein said cell management table is adapted to classify said base station in a detected cell into one of groups of base stations currently in communication, base stations that are each a candidate destination of a handover, and other base stations.

3. A communication terminal apparatus according to claim 1 or 2, wherein said management means is adapted to shorten the cycle of the cell detection and/or of the cell monitoring when the number of said base stations currently in communication is below a first predetermined threshold and the number of said base stations that are each a candidate destination of a handover is below a second predetermined threshold.

4. A communication terminal apparatus according to one of claims 1 to 3, said terminal apparatus being applicable for use in a plurality of systems, wherein, when a cell candidate in another system is known, said management means is adapted to make the frequency of performing said cell detection and/or cell monitoring low.

5. A communication terminal apparatus according to claim 4, wherein said management means is adapted to shorten said cycle of the cell detection and/or of the cell monitoring when said communication terminal apparatus is connected to a service operator and to another remote service operator and said communication terminal apparatus is on a boundary between the two service operators.

6. A radio communication method comprising a cell detection step of detecting a cell based on the results of correlation operation processing of a received signal performed with a spreading code used on a transmission side;
a cell monitoring step of measuring a level of a signal from a base station in a detected cell;
a cell management step of classifying base stations on a cell management table said base stations classified based on the level of signals from said base stations; and
a control step of controlling the cycle of performing cell detection and/or cell monitoring based on contents of the cell management table,
**characterised by**
the cycle of the cell monitoring being shortened by the management table when the number of said base stations currently in communication is below a first predetermined threshold.

## Patentansprüche

1. Kommunikations-Endgerätvorrichtung zum Durchführen von Kommunikation in einem Mobilkommunikations-Netz, das eine Basisstation enthält, und die umfasst:
eine Zellenerfassungseinrichtung (104) zur Zellenerfassung auf Grundlage der Ergebnisse von Korrelationsoperations-Verarbeitung eines Empfangssignals unter Verwendung eines Spreizcodes, der für eine Sendeseite eingesetzt wird;
eine Zellenüberwachungseinrichtung (105) zur Zellenüberwachung unter Verwendung der Ergebnisse der Korrelationsoperations-Verarbeitung;
eine Zellenverwaltungstabelle (106) zur Verwaltung von Zelleninformationen durch Einteilen der Basisstationen in Basisstationsgruppen auf Grundlage der Ergebnisse der Zellenerfassung und Zellenüberwachung; und
eine Verwaltungseinrichtung (107) zur Steuerung des Zyklus des Durchführens von Zellenerfassung und/oder Zellenüberwachung auf Grundlage des Inhalts der Zellenverwaltungstabelle;
**dadurch gekennzeichnet, dass**:
die Verwaltungstabelle so eingerichtet ist, dass sie den Zyklus der Zellenüberwachung verkürzt, wenn die Anzahl der Basi sstationen, die aktuell kommunizieren, unter einem ersten vorgegebenen Schwellenwert liegt.

2. Kommunikations-Endgerätvorrichtung nach Anspruch 1, wobei die Zellenverwaltungstabelle so eingerichtet ist, dass sie die Basisstation in einer erfassten Zelle in eine von Gruppen von Basisstationen, die aktuell kommunizieren, Basisstationen, die ein mögliches Ziel eines Handover sind, und andere Basisstationen einteilt.

3. Kommunikations-Endgerätvorrichtung nach Anspruch 1 oder 2, wobei die Verwaltungseinrichtung so eingerichtet ist, dass sie den Zyklus der Zellenerfassung und/oder der Zellenüberwachung verkürzt, wenn die Anzahl der Basisstationen, die aktuell kommunizieren, unter einem ersten vorgegebenen Schwellenwert liegt und die Anzahl von Basisstationen, die jeweils ein mögliches Ziel eines Handover sind, unter einem zweiten vorgegebenen Schwellenwert liegt.

4. Kommunikations-Endgerätvorrichtung nach einem der Ansprüche 1 bis 3, wobei die Endgerätvorrichtung für die Verwendung in einer Vielzahl von Systemen eingesetzt werden kann und wobei die Verwaltungseinrichtung so eingerichtet ist, dass sie, wenn eine mögliche Zelle in einem anderen System bekannt ist, die Frequenz zum Durchführen der Zellenerfassung und/oder Zellenüberwachung verringert.

5. Kommunikations-Endgerätvorrichtung nach Anspruch 4, wobei die Verwaltungseinrichtung so eingerichtet ist, dass sie den Zyklus der Zellenerfassung und/oder der Zellenüberwachung verkürzt, wenn die Kommunikations-Endgerätvorrichtung mit einem Dienstanbieter und einem weiteren entfernten Dienstanbieter verbunden ist und sich die Kommunikations-Endgerätvorrichtung an einer Grenze zwischen den zwei Dienstbetreibern befindet.

6. Funkkommunikationsverfahren, das einen Zellenerfassungsschritt des Erfassens einer Zelle auf Grundlage der Ergebnisse von Korrelationsoperations-Verarbeitung eines empfangenen Signals, die mit einem Spreizcode durchgeführt wird, der auf einer Sendeseite verwendet wird;
einen Zellenüberwachungsschritt des Messens eines Pegels eines Signals von einer Basisstation in einer erfassten Zelle;
einen Zellenverwaltungsschritt des Einteilens von Basisstationen in einer Zellenverwaltungstabelle, wobei die Basisstationen auf Grundlage des Pegels von Signalen von den Basisstationen eingeteilt werden; und
einen Steuerschritt des Steuerns des Zyklus des Durchführens von Zellenerfassung und/oder Zellenüberwachung auf Grundlage des Inhalts der Zellenverwaltungstabelle umfasst,
**dadurch gekennzeichnet, dass**:
der Zyklus der Zellenüberwachung durch die Verwaltungstabelle verkürzt wird, wenn die Anzahl der Basisstationen, die aktuell kommunizieren, unter einem ersten vorgegebenen Schwellenwert liegt.

## Revendications

1. Appareil terminal de communication pour effectuer des communications à l'intérieur d'un réseau de communication mobile incluant une station de base, comprenant :
un moyen de détection de cellules (104) pour la détection de cellules sur la base des résultats du traitement de l'opération de corrélation d'un signal de réception en utilisant un code pour l'étalement utilisé pour un côté émission ;
un moyen de surveillance de cellules (105) pour la surveillance de cellules en utilisant les résultats dudit traitement de l'opération de corrélation ;
une table de gestion de cellules (106) pour la gestion des informations de cellules par classification des stations de base en groupes de stations de base, sur la base desdits résultats de détection de cellules et de surveillance de cellules ; et
un moyen de gestion (107) pour la commande du cycle d'exécution de détection de cellules et/ou de surveillance de cellules sur la base des contenus de la table de gestion de cellules ;
**caractérisé en ce que**
ladite table de gestion est adaptée pour raccourcir le cycle de surveillance de cellules lorsque le nombre desdites stations de base actuellement en communication est en dessous d'un premier seuil prédéterminé.

2. Appareil terminal de communication selon la revendication 1, dans lequel ladite table de gestion de cellules est adaptée pour classifier ladite station de base dans une cellule détectée en un des groupes des stations de base actuellement en communication, des stations de base qui sont chacune une destination candidate d'un transfert, et des autres stations de base.

3. Appareil terminal de communication selon la revendication 1 ou 2, dans lequel ledit moyen de gestion est adapté pour raccourcir le cycle de détection de cellules et/ou de surveillance de cellules lorsque le nombre desdites stations de base actuellement en communication est en dessous d'un premier seuil prédéterminé et que le nombre desdites stations de base qui sont chacune une destination candidate d'un transfert est en dessous d'un second seuil prédéterminé.

4. Appareil terminal de communication selon l'une quelconque des revendications 1 à 3, ledit appareil terminal étant applicable pour l'utilisation dans une pluralité de systèmes, dans lequel, lorsqu'une cellule candidate dans un autre système est connue, ledit moyen de gestion est adapté pour établir la fréquence d'exécution de la détection de cellules et/ou de la surveillance de cellules basse.

5. Appareil terminal de communication selon la revendication 4, dans lequel ledit moyen de gestion est adapté pour raccourcir ledit cycle de détection de cellules et/ou de surveillance de cellules lorsque ledit appareil terminal de communication est connecté à un opérateur de service et à un autre opérateur de service distant et ledit appareil terminal de communication est à une frontière entre les deux opérateurs de service.

6. Procédé de communication radio comprenant une étape de détection de cellules consistant à détecter une cellule sur la base des résultats du traitement de l'opération de corrélation d'un signal reçu effectué avec un code d'étalement utilisé sur un côté émission ;
une étape de surveillance de cellules consistant à mesurer un niveau d'un signal provenant d'une station de base dans une cellule détectée ;
une étape de gestion de cellule consistant à classifier des stations de base sur une table de gestion de cellule lesdites stations de base étant classifiées sur la base du niveau des signaux provenant desdites stations de base ; et
une étape de commande consistant à commander le cycle d'exécution de la détection de cellules et/ou de la surveillance de cellules sur la base des contenus de la table de gestion de cellules,
**caractérisé par**
le cycle de surveillance de cellules étant raccourci par la table de gestion lorsque le nombre desdites stations de base actuellement en communication est en dessous d'un premier seuil prédéterminé.
